Europäisches Patentamt

European Patent Office

Office européen des brevets

(19)

(11) Veröffentlichungsnummer: **0 183 154**
**A2**

## EUROPÄISCHE PATENTANMELDUNG

(21) Anmeldenummer: 85114572.2

(22) Anmeldetag: 16.11.85

(51) Int. Cl.4 **G01F 23/16**

(30) Priorität: 23.11.84 DE 3442659

(43) Veröffentlichungstag der Anmeldung:
04.06.86 Patentblatt 86/23

(84) Benannte Vertragsstaaten:
AT BE DE FR GB NL

(71) Anmelder: **BASF Aktiengesellschaft**
**Carl-Bosch-Strasse 38**
**D-6700 Ludwigshafen(DE)**

(72) Erfinder: **Sadlowski, Jürgen, Dr.**
**Edenkobener Strasse 3**
**D-6700 Ludwigshafen(DE)**
Erfinder: **Brandstetter, Franz, Dr.**
**Ritterbueschel 45**
**D-6730 Neustadt(DE)**
Erfinder: **Faulhaber, Friedrich Richard, Dr.**
**Ostpreussenstrasse 3**
**D-6704 Mutterstadt(DE)**
Erfinder: **Grill, Rolf Juergen, Dr.**
**Schubertstrasse 9**
**D-6701 Dannstadt-Schauernheim(DE)**
Erfinder: **Zentgraf, Ernst**
**Tilsiter Strasse 65**
**D-6703 Limburgerhof(DE)**

(54) Verfahren zur kontinuierlichen Messung des Füllungsgrades von Wirbelschichtapparaten.

(57) Verfahren zur kontinuierlichen Messung des Füllungsgrades von Wirbelschichtapparaten, dadurch gekennzeichnet, daß der hydrostatische Differenzdruck über die Wirbelschicht mittels direkt am Wirbelschichtapparat angebrachter Druckmittler, die mit der Apparatewand bündig abschließen, gemessen wird.

EP 0 183 154 A2

Verfahren zur kontinuierlichen Messung des Füllungsgrades von Wirbelschichtapparaten

Die vorliegende Erfindung betrifft ein Verfahren zur kontinuierlichen Messung des Füllungsgrades von Wirbelschichtapparaten. Der Füllungsgrad beeinflußt in starkem Maße die Stabilität von Wirbelschichten und den Produktüberriß aus der Wirbelschicht. Das bedeutet, daß der Füllungsgrad allgemein wichtig zur Steuerung des Betriebsverhaltens von Wirbelschichtapparaten wie Reaktoren, Trocknern, Strippern und Aktivatoren ist. Bei kontinuierlich betriebenen Wirbelschichtapparaten ist der Füllungsgrad eine wichtige Steuergröße zur Einstellung der Verweilzeit.

Geläufige Methoden zur Füllgradbestimmung bedienen sich der Standmessung oder der absoluten Ermittlung der in einem Apparat vorhandenen Masse.

Eine in Wirbelschichtapparaten häufig eingesetzte Standmeßmethode beruht auf der radiometrischen Durchstrahlungsmessung. Sie hat den Nachteil, daß das Meßsignal abhängig von der Schüttdichte des Wirbelmaterials ist und somit zusätzliche Messungen und Rechenoperationen zur Ermittlung des Füllungsgrades des Apparates in absoluten Masseneinheiten erfordert. Eine grundsätzliche Ungenauigkeit der radiometrischen Standmessung in Wirbelschichten liegt in dem verschwommenen Übergangsbereich von der Wirbelschicht in den Gasraum über der Wirbelschicht begründet.

Die Absolutmessung über die Wägung des gesamten Apparates mit der Wirbelproduktfüllung kann sehr genau ausgeführt werden. Voraussetzung ist jedoch, daß die Gewichtskraft ohne wesentliche Kraftnebenschlüsse in das Wägesystem eingeleitet werden kann. Diese Forderung führt vor allem bei Apparaten, die unter Druck betrieben werden, zu aufwendigen Konstruktionen im Bereich der Rohrleitungsanschlüsse. Zudem muß bei großtechnischen Apparaten, die sich über mehrere Geschosse erstrecken, mit Meßwertverfälschungen durch senkrechte Luftströmungen gerechnet werden.

Ein meßtechnisch einfaches Verfahren zur Erfassung des Füllungsgrades existiert in der Erfassung des Differenzdrucks der Produktsäule mit der sog. Perlmethode. Hierbei wird ein sogenanntes Perlgas durch eine bis zum Boden des Apparates führende Einperlleitung in den Behälter geleitet. In der Perlleitung bildet sich dabei ein Druck aus, der dem Bodendruck des Behälters entspricht. Durch Differenzdruckmessung zwischen dem Druck in der Perlleitung und dem Druck oberhalb der Produktoberfläche erhält man den hydrostatischen Druck der Produktsäule. Bei Wirbelschichtapparaten zur Durchführung von chemischen Reaktionen, wie z.B. Polymerisationsreaktoren, ist dieses Verfahren nur mit Einschränkungen anwendbar: Wird das Perlgas dem Reaktionssystem entnommen, so finden die entsprechenden Reaktionen auch im Meßumformer und in der Perlleitung statt, was zu Anwachsungen und Verstopfungen führen kann. Ein Ausweichen auf ein inertes Perlgas verbietet sich häufig wegen der Anreicherung der Inertgaskomponente im Reaktor mit entsprechenden Konsequenzen für die Reaktionsführung.

Ferner ist aus der Füllstandsmessung an Flüssigkeiten die direkte Messung des hydrostatischen Druckes mittels Druckaufnehmern in der Apparatewand bekannt.

Nach der vorherrschenden Meinung erschien dieses Verfahren für die Füllstandsmessung in Wirbelschichten nicht geeignet, da eine unverfälschte Einleitung des hydrostatischen Druckes von Schüttgütern in das Meßsystem durch innere Reibung und Brückenbildung im Produkt verhindert wird. Außerdem besteht die Gefahr, daß durch direkte Impulsübertragung größerer Feststoffpartikel Fluktationen entstehen, die in der Größenordnung des Nutzsignales liegen und damit eine zuverlässige Messung verhindern.

Insbesondere bei Polymerisationsreaktoren besteht zudem die Gefahr, daß durch Polymerisatbildung auf den Meßfühlern die Messung stark verfälscht wird.

Aufgabe der vorliegenden Erfindung war es, ein Verfahren zur kontinuierlichen Messung des Füllungsgrades anzugeben, das einfach, genau und störunanfällig ist.

Diese Aufgabe wurde erfindungsgemäß dadurch gelöst, daß bei dem Verfahren der eingangs genannten Art der hydrostatische Differenzdruck über die Wirbelschicht mittels direkt am Wirbelschichtapparat angebrachte Druckmittler, die mit der Apparatewand abschließen, gemessen wird. Ein Druckmittler ist im Bodenbereich der Wirbelschicht angeordnet, der zweite Druckmittler befindet sich im Gasbereich über der Wirbelschicht.

Die Druckmittler sind üblicherweise als Druckmeßdosen mit kreisförmiger, planer Meßmembran ausgebildet. Eine besondere Ausführungsform der Druckmittler ist dadurch gekennzeichnet, daß der Druckmittler ringförmig als Teil der Apparatewand ausgebildet ist.

Die vorliegende Erfindung behebt also die angeführten Mängel des bekannten Standes der Technik dadurch, daß der hydrostatische Differenzdruck der Wirbelschicht durch zwei in der Apparatewand angeordnete Membrandruckmittler direkt gemessen wird. Ein Membrandruckmittler befindet sich im Bodenbereich der Wirbelschicht, der zweite Druckmittler im Gasraum über der Wirbelschicht. Wichtig ist, daß beide Druckmittler quasi bündig mit der Reaktorinnenwand abschließen. Es hat sich gezeigt, daß bei dieser Anordnung überraschenderweise keine Produktanwachsungen auf den Meßmembranen erfolgen, die zu Meßwertverfälschungen führen können. Des weiteren ist festgestellt worden, daß im stabilen Betriebsbereich der Wirbelschicht keine Meßverfälschungen durch Produkt- oder Gasimpulse erfolgen. Gewisse Meßwertverzerrungen bei instabiler Wirbelschicht können sogar sehr vorteilhaft als Warngrenzen einer nicht vorteilhaften Betriebsweise der Wirbelschicht herangezogen werden. Ein weiterer Vorteil des erfindungsgemäßen Verfahrens ist, daß Grobpartikel, die sich in der Wirbelschicht durch Sintereffekte ergeben, stark fluktuierende Meßsignale durch Impulsübertragung an die Meßmembran auslösen und damit einen Frühindikator für einen sich anbahnenden gefährlichen Reaktorzustand liefern.

Im einzelnen zeichnet sich die Erfindung dadurch aus, daß die beiden Membrandruckaufnehmer einer Differenzdruckmeßkette so in den Wirbelschichtapparat eingebaut werden, daß die Meßmembranen bündig mit der Apparateinnenwand abschließen. Dies ist kein Problem bei Apparaten mit planen Innenwänden, da die Meßmembranen von im Handel erhältlichen Druckmittlern plan sind. Bei Wirbelschichtapparaten mit zylindrischen Innenflächen ist der Durchmesser des Membrandruckaufnehmers so zu wählen, daß von Seiten der Produktströmung in der Wirbelschicht nur eine zu vernachlässigende Störung der Wandgeometrie erfolgt, die keine Ursache für Produktanwachsungen liefert. Dies ist dann der Fall, wenn der Membranquerschnitt kleiner bzw. höchstens gleich dem fünften Teil des Apparatedurchmessers ist.

Aus Gründen der Meßgenauigkeit wird auf der anderen Seite ein möglichst großer Membrandurchmesser angestrebt. Der Anwendungsbereich der beanspruchten Erfindung erstreckt sich bezüglich des Absolutdruckes von 1 bis 100 bar, insbesondere von 1 bis 40 bar. Gefordert werden hierbei eine Auflösung des Differenzdruckes von 1 mbar. Zur Gewährleistung dieser Forderung ist ein Mindestquerschnitt der Meßmembran von 80 mm erforderlich. Falls sich beide Forderungen aus geometrischen Gründen widersprechen, kann der Druckmittler auch ringförmig als Teil der Apparatewand ausgeführt werden.

Die Anwendungstemperatur der beanspruchten Erfindung erstreckt sich von -20°C bis +150°C. Zur Kompensation von Temperaturschwankungen wird die gesamte Differenzdruckmeßkette temperiert.

**Ansprüche**

1. Verfahren zur kontinuierlichen Messung des Füllungsgrades von Wirbelschichtapparaten, dadurch gekennzeichnet, daß der hydrostatische Differenzdruck über die Wirbelschicht mittels direkt am Wirbelschichtapparat angebrachter Druckmittler, die mit der Apparatewand bündig abschließen, gemessen wird.

2. Verfahren nach Anspruch 1, dadurch gekennzeichnet, daß ein Druckmittler im Bodenbereich der Wirbelschicht und mindestens ein zweiter Druckmittler im Gasbereich über der Wirbelschicht angeordnet ist.

3. Verfahren nach Anspruch 1 und 2, dadurch gekennzeichnet, daß die Druckmittler ringförmig als Teil der Apparatewand ausgebildet sind.